# EUROPEAN PATENT APPLICATION

(11) **EP 4 838 507 A1**
(43) Date of publication of application: **11.11.2026**
(21) Application number: 26169237.0
(22) Date of filing: 30.03.2026
(51) Int. Cl.: G08G 5/80, G08G 5/21, G08G 5/25, G08G 5/34, G08G 5/53, G08G 5/55, G08G 5/72

(54) **AIRCRAFT CONFLICT DETECTION**

(30) Priority: 06.05.2025 US 202519199820
(71) Applicant: The Boeing Company, Arlington, VA 22202 (US)
(72) Inventor: THOMPSON, Alec Jeffrey, Arlington, 22202 (US)
(74) Representative: Boult Wade Tennant LLP

(57) **Abstract**

In some examples, a device may receive first data and second data indicating a first trajectory of an aircraft and a second trajectory associated with an object, respectively. The device may fit polynomial curves to the first and second trajectories. The device may construct a set of horizontal distance equations and a set of vertical distance equations based on fitting the polynomial curves to the first trajectory and the second trajectory. The device may determine, based on the horizontal and vertical distance equations, one or more of a first instant in time at which a distance between the aircraft and the object satisfies a threshold or a second instant in time at which the distance fails to satisfy the threshold. The device may perform one or more actions based on the one or more of the first instant in time or the second instant in time.

## Description

### FIELD

The present disclosure relates generally to aircraft systems and to aircraft conflict detection.

### BACKGROUND

Aircraft conflict detection is a process for determining whether two or more aircraft may collide. In some cases, an aircraft conflict detection system (ACDS) may include a system for performing aircraft conflict detection. For example, an ACDS may predict the paths of aircraft over time and may determine distances between the aircraft, over time, based on the predicted paths. The ACDS may determine whether the distances between the aircraft satisfy a minimum safe distance. The ACDS may determine that the aircraft may collide when the distances fail to satisfy the minimum safe distance.

### SUMMARY

There is described herein a method, comprising: receiving, by a device, first data and second data, wherein the first data indicates a first trajectory of an aircraft associated with the device and the second data indicates a second trajectory associated with an object; fitting, by the device, polynomial curves to the first trajectory and the second trajectory; constructing, by the device, a set of horizontal distance equations and a set of vertical distance equations based on fitting the polynomial curves to the first trajectory and the second trajectory; determining, by the device and based on the set of horizontal distance equations and the set of vertical distance equations, one or more of a first instant in time at which a distance between the aircraft and the object satisfies a threshold or a second instant in time at which the distance fails to satisfy the threshold; and performing, by the device, one or more actions associated with controlling or navigating the aircraft based on the one or more of the first instant in time or the second instant in time.

There is described herein a device, comprising: one or more memories; and one or more processors, coupled to the one or more memories, configured to: receive first data and second data, wherein the first data indicates a first trajectory of an aircraft associated with the device and the second data indicates a second trajectory associated with an object; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the aircraft and the object satisfies a threshold or a second instant in time at which the distance fails to satisfy the threshold; and perform one or more actions associated with controlling or navigating the aircraft based on the one or more of the first instant in time or the second instant in time.

There is described herein a non-transitory computer-readable medium storing a set of instructions, the set of instructions comprising: one or more instructions that, when executed by one or more processors of a device, cause the device to: receive first data and second data, wherein the first data indicates a first trajectory of an aircraft associated with the device and the second data indicates a second trajectory associated with an object; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the aircraft and the object satisfies a threshold or a second instant in time at which the distance fails to satisfy the threshold; and perform one or more actions associated with controlling or navigating the aircraft based on the one or more of the first instant in time or the second instant in time.

The features, functions, and advantages described herein can be achieved independently in various examples or can be combined in other examples, further details of which are shown in the drawings and described below.

### BRIEF DESCRIPTION OF THE DRAWINGS

Figs. 1A-1E are diagrams of an example associated with aircraft conflict detection.
Fig. 2 is a diagram of an example environment in which systems and/or methods described herein may be implemented.
Fig. 3 is a diagram of example components of a device associated with aircraft conflict detection.
Fig. 4 is a flowchart of an example process associated with aircraft conflict detection.

### DETAILED DESCRIPTION

The following detailed description of examples refers to the accompanying drawings. The same reference numbers in different drawings identify the same or similar elements.

An aircraft conflict detection system (ACDS) may utilize a conflict detection method to determine whether the paths of two aircraft may conflict. As used herein, the paths of two aircraft may conflict when the paths would cause the aircraft to be within less than a minimum distance from each other at a point in time. For example, the paths of two aircraft may conflict when the paths would result in a collision between the two aircraft or a disruption in the operation of either of the two aircraft.

In some cases, an ACDS may be configured to utilize a "brute force" method that includes discretizing an ownship (e.g., an aircraft that includes or is associated with the ACDS) path and an intruder (e.g., an aircraft other than the aircraft that includes or is associated with the ACDS) path and may compare distances between points at each discretized point (referred to herein as a "timestep"). However, an amount of time required to perform the brute force method will scale linearly with the number of timesteps in the ownship and intruder paths. This increase in the amount of time required to perform the brute force method may prevent the ACDS from detecting a potential collision within a sufficient amount of time for the aircraft to perform a collision avoidance maneuver.

Reducing the number of timesteps may reduce the amount of time required to perform the brute force method. However, using timesteps at a one second resolution when the aircraft are traveling at higher speeds (e.g., at a relative velocity between the ownship and the intruder of 100 m/s) may prevent the ACDS from detecting potential conflicts in cases where the intruder path passes near an edge of a near-miss boundary associated with the ownship.

In some cases, the ACDS may utilize a constant velocity projection method. In these cases, the ACDS may treat ownship and intruder paths as constant velocity projections. This may allow the ACDS to utilize a simple geometric detection of possible conflicts, an accurate calculation of a time at which the aircraft are less than a minimum safe distance apart, and an accurate calculation of the closest point of approach. However, because the ownship and intruder paths are treated as constant velocity projections, an accuracy associated with a result of utilizing the constant velocity projection method may be decreased when the aircraft are accelerating or turning.

Some examples described herein relate to an ACDS that is able to quickly and accurately detect conflicts between aircraft. In some examples, the ACDS utilizes polynomial curves to construct horizontal and vertical distance polynomials for each combination of ownship and intruder predicted paths. In some examples, the ACDS utilizes the horizontal and vertical distance polynomials to determine a time of entry and a time of exit from a conflict volume (e.g., a volume of space in which the aircraft are less than a minimum distance from each other) and a time associated with a closest point of approach between the aircraft. Further, the horizontal and vertical distance polynomials can accurately account for changes in acceleration and predicted paths that include one or more turns. As a result, the ACDS is able to quickly and accurately determine potential conflicts between aircraft that are accelerating or turning.

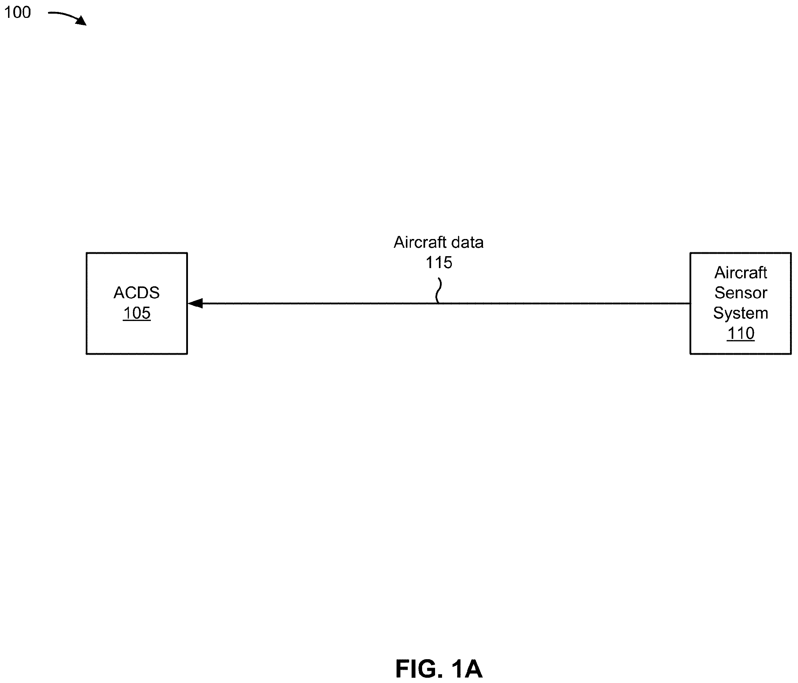

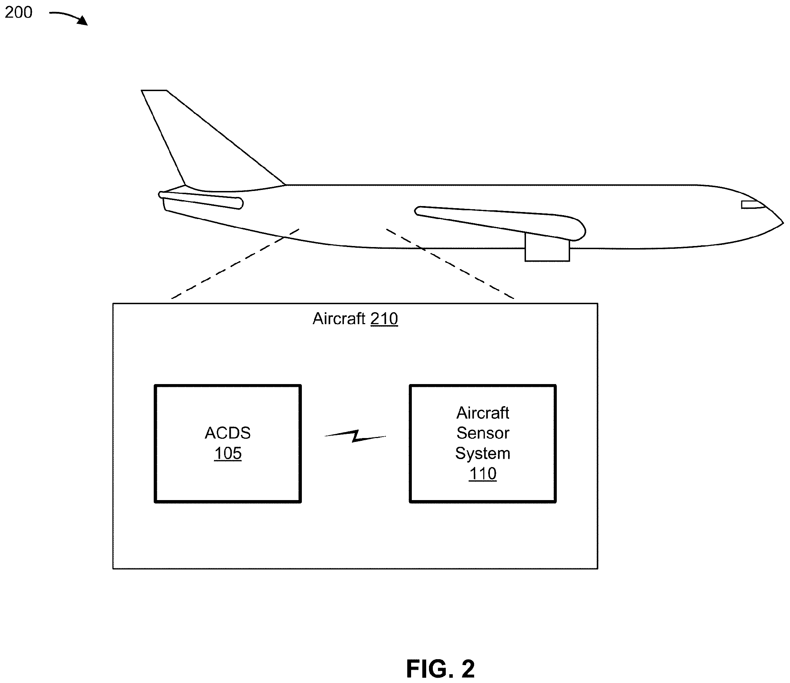

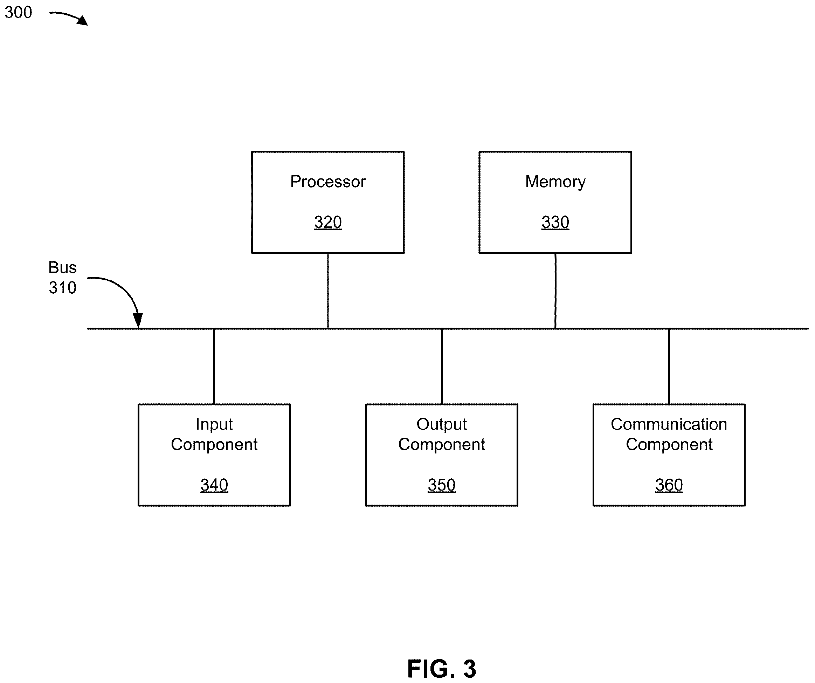

Figs. 1A-1E are diagrams of an example100 associated with aircraft conflict detection. As shown in Figs. 1A-1E, example100 includes an ACDS 105 and an aircraft sensor system 110. These devices are described in more detail below in connection with Fig. 2 and Fig. 3.

As described in greater detail below, the ACDS 105 receives aircraft data associated with multiple different aircraft (e.g., an ownship and one or more other aircraft) and predicts a path (e.g., a trajectory or track) for each of the aircraft based on the aircraft data. For each predicted path, the ACDS 105 breaks the path into segments based on a shape of the path, the velocity of the aircraft associated with the path, and the acceleration of the aircraft. For example, a segment of a path may be a linear segment (e.g., a portion of the path in which the aircraft is traveling in a straight line and a constant velocity), a linear segment with acceleration (e.g., a portion of the track in which the aircraft is traveling in a straight line and is accelerating or decelerating), or an arc (e.g., a portion of the track in which the aircraft is turning).

The ACDS 105 uses polynomials to represent the segments. The ACDS 105 rotates the polynomials for paths predicted for aircraft other than the ownship into a local north-east-down (NED) plane of the ownship. The portions of the polynomials corresponding to the down plane are used for a vertical distance equation and the portions of the polynomials corresponding to the north and east planes are used for a horizontal distance equation.

The ACDS 105 sets the vertical and horizontal distance equations equal to the bounds of a loss of well-clear (LOWC) cylinder and/or a near mid-air collision (NMAC) cylinder to determine a time at which the ownship enters/leaves the LOWC cylinder and/or the NMAC cylinder. The ACDS 105 determines the derivative of the vertical and horizontal distance equations, and utilizes the derivative of the vertical and horizontal distance equations to determine a closest point of approach between the ownship and the other aircraft.

As shown by reference number 115, the ACDS 105 receives aircraft data from the aircraft sensor system 110. In some examples, the ACDS 105 periodically receives aircraft data from the aircraft sensor system 110. For example, the aircraft sensor system 110 may be configured to generate and/or provide aircraft data to the ACDS 105 every second, every two seconds, or every ten seconds, among other examples.

Additionally, or alternatively, the ACDS 105 receives the aircraft data based on an occurrence of an event or a satisfaction of a condition. For example, the aircraft sensor system 110 may be configured to generate and/or provide aircraft data to the ACDS 105 based on receiving a query from the ACDS 105, an aircraft being initially detected by the aircraft sensor system 110, or a change in the aircraft data satisfying a threshold, among other examples.

The aircraft data includes ownship data and intruder data. The ownship data includes data associated with a first aircraft (e.g., an ownship) for which the ACDS 105 is configured to perform aircraft conflict detection. The ownship data includes data indicating a trajectory of the ownship at one or more instances of time.

For example, the ownship data may include data indicating a position of the first aircraft at one or more instances in time, a velocity of the first aircraft at one or more instances in time, an acceleration of the first aircraft at one or more instances in time, a trajectory of the first aircraft at one or more instances in time, and/or an intended flight path of the first aircraft (e.g., based on a destination or flight plan associated with the first aircraft), among other examples.

Similarly, the intruder data includes data associated with one or more second aircraft that are different from the first aircraft. The intruder data includes data indicating a trajectory for each second aircraft at the one or more instances of time for which the trajectory of the ownship is indicated. For example, for each second aircraft, the intruder data may include data indicating a position of the second aircraft at the one or more instances in time, a velocity of the second aircraft the one or more instances in time, an acceleration of the second aircraft the one or more instances in time, a trajectory of the second aircraft the one or more instances in time, and/or a predicted flight path of the second aircraft (e.g., based on the position, velocity, acceleration, and/or trajectory of the second aircraft), among other examples.

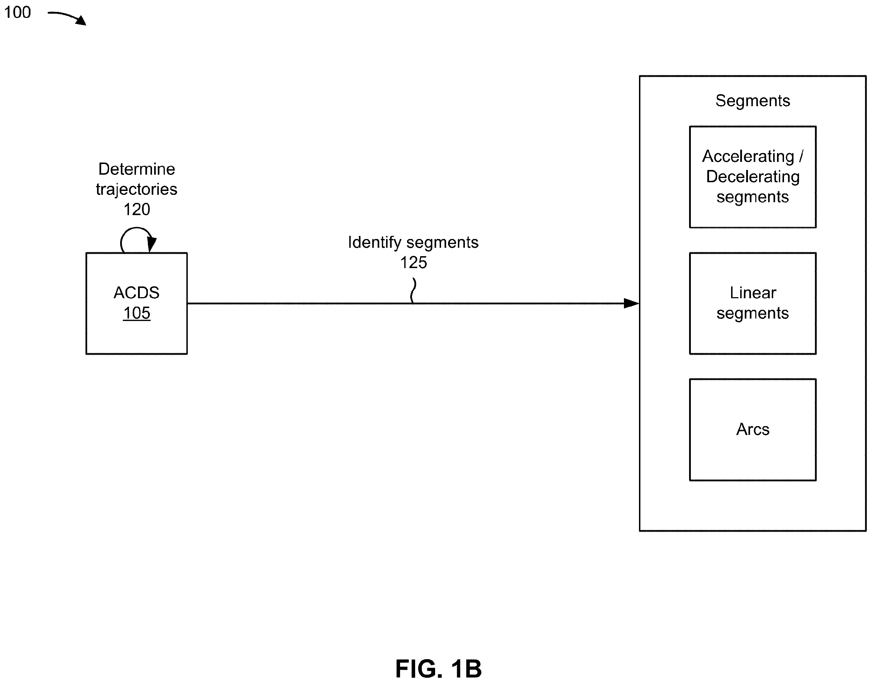

As shown in Fig. 1B, and by reference number 120, the ACDS 105 determines trajectories based on the aircraft data. For example, the ACDS 105 may determine an ownship trajectory associated with the first aircraft and an intruder trajectory associated with a second aircraft.

The ACDS 105 constructs the trajectories using primitive shapes or segments. For example, a trajectory of an aircraft may be determined as a series of segments. As shown by reference number 125, the ACDS 105 identifies segments of a trajectory based on the aircraft data. Each segment may be a linear segment, an accelerating (or decelerating) segment, or an arc.

A linear segment corresponds to a straight-line path along a trajectory of an aircraft during which an aircraft is traveling at a constant velocity. For the trajectory of the first aircraft, the ACDS 105 identifies portions of the ownship data where a direction in which the first aircraft is traveling and a velocity at which the first aircraft is traveling remains constant for a set of consecutive time instances.

The ACDS 105 identifies an end of a linear segment based on a change in the velocity of the first aircraft. For example, the ACDS 105 may determine that a change in the velocity from a first time instance to a second time instance satisfies (e.g., is greater than) a threshold. The ACDS 105 determines that the first time instance corresponds to an end of the linear segment based on the change in the velocity satisfying the threshold.

In some examples, the ACDS 105 limits a length of a linear segment to avoid a loss of precision associated with performing fitting (described below). The ACDS 105 may limit a length of a linear segment to be within a range of 5-10 kilometers (e.g., 7 kilometers) based on a position of the first aircraft being expressed using an NED coordinate system and to 50 kilometers, or approximately 50 kilometers, based on the position of the first aircraft being expressed using a North-East-Altitude (NEA) coordinate system. By limiting the length of a linear segment in this way, an accuracy of the fitting may be within +/- 1 meter.

The ACDS 105 determines that a portion of the trajectory of the first aircraft corresponding to the identified portions of the ownship data are linear segments based on the direction and velocity remaining constant over the set of consecutive time instances. The ACDS 105 determines linear segments for the trajectory of each second aircraft in a similar manner.

An accelerating segment (also referred to as a "quadratic segment") corresponds to a straight-line path along a trajectory of an aircraft during which an aircraft is accelerating or decelerating at a constant rate. For the trajectory of the first aircraft, the ACDS 105 identifies portions of the ownship data where a direction in which the first aircraft is traveling and an acceleration of the first aircraft remains constant for a set of consecutive time instances.

The ACDS 105 identifies an end of an accelerating segment based on a change in the acceleration of the first aircraft. For example, the ACDS 105 may determine that a change in the acceleration from a first time instance to a second time instance satisfies (e.g., is greater than) a threshold. The ACDS 105 determines that the first time instance corresponds to an end of the accelerating segment based on the change in the acceleration satisfying the threshold.

In some examples, the ACDS 105 limits a length of a quadratic segment to avoid a loss of precision associated with performing fitting (described below). The ACDS 105 may limit a length of a quadratic segment to be within a range of 5-10 kilometers (e.g., 7 kilometers) based on a position of the first aircraft being expressed using an NED coordinate system and to 50 kilometers, or approximately 50 kilometers, based on the position of the first aircraft being expressed using an NEA coordinate system. By limiting the length of a quadratic segment in this way, an accuracy of the fitting may be within +/- 1 meter.

The ACDS 105 determines that a portion of the trajectory of the first aircraft corresponding to the identified portions of the ownship data are accelerating segments based on the direction and acceleration remaining constant over the set of consecutive time instances. The ACDS 105 determines accelerating segments for the trajectory of each second aircraft in a similar manner.

The ACDS 105 identifies all segments that are not classified as linear segments or accelerating segments as arcs (also referred to as "cubic segments"). For the trajectory of the first aircraft, the ACDS 105 identifies remaining portions of the ownship data that are not classified as linear segments or accelerating segments.

An arc may be associated with an acceleration or a deceleration of an aircraft. The ACDS 105 identifies points at which a velocity of the aircraft crosses zero (e.g., a point at which the velocity of the aircraft crosses the x-axis, the y-axis, or the z-axis) and splits the arc at the identified points.

The ACDS 105 calculates an angle swept by the arc based on splitting the arc at the identified points. In some examples, the angle swept by the arc is greater than 45 degrees. In these examples, the ACDS 105 splits the arc to cause the angle swept by the resulting split arc to be less than 45 degrees. In some examples, the ACDS 105 splits an arc at latitude/longitude minimums and maximums. The ACDS 105 determines arcs for the trajectory of each second aircraft in a similar manner.

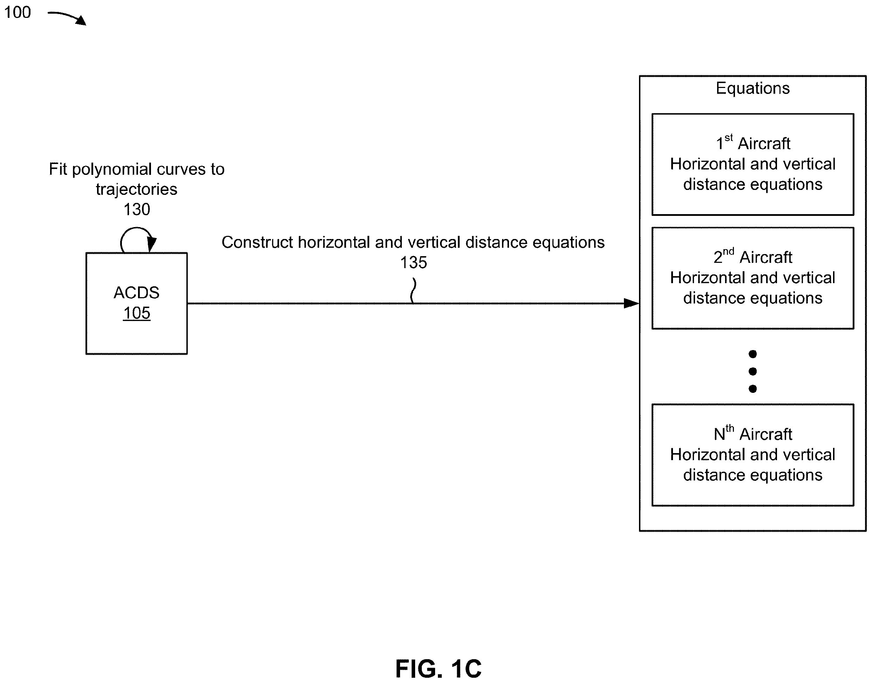

As shown in Fig. 1C, and by reference number 130, the ACDS 105 fits polynomial curves to the determined trajectories. In some examples, the ACDS 105 determines a smallest order polynomial fit associated with representing a set of first time slices of a first predicted path associated with the first aircraft and a set of second time slices of a second predicted path associated with the second aircraft with an accuracy that satisfies a threshold.

In some examples, the ACDS 105 rotates each segment into a local plane of an NED coordinate system. An NED coordinate system is a local coordinate system that uses Cartesian coordinates (xNorth, yEast, zDown) to describe position relative to a local origin (typically above the Earth's surface). The origin is defined by geodetic coordinates (e.g., latitude, longitude, and altitude) corresponding to a location of the first aircraft. The axes of the NED coordinate system are oriented along the geodetic directions of the Earth's surface. The x-axis is oriented along the North-South direction and points north, the y-axis is oriented along the East-West direction and points east, and the z-axis is oriented in a direction perpendicular to the Earth's surface and points down.

Rotating the segments into the local plane of the NED coordinate system enables time-parameterized fitted polynomials to be generated for each component (e.g., an x-axis component, a y-axis component, and a z-axis component).

In some examples, the ACDS 105 applies a linear fitting method to linear (non-accelerating, constant velocity) segments. The ACDS 105 utilizes linear fits to the linear segments based on a linear fitting polynomial. In some examples, the linear fitting polynomial is in the form of: $x \left(t\right) = vt + {x}_{0} ,$ where x is the position of the aircraft, *x*₀ is the position of the aircraft at an initial time (e.g., time = 0 seconds), *v* is the velocity of the aircraft, and *t* is time.

The ACDS 105 applies a quadratic fitting method to accelerating segments. The ACDS 105 utilizes quadratic fits to the accelerating segments based on a quadratic fitting polynomial. In some examples, the quadratic fitting polynomial is in the form of: $x \left(t\right) = {at}^{2} + vt + {x}_{0} ,$ where a is the acceleration of the aircraft, x is the position of the aircraft, *x*₀ is the position of the aircraft at an initial time (e.g., time = 0 seconds), *v* is the velocity of the aircraft, and *t* is time.

The ACDS 105 uses cubic polynomials to represent the sinusoidal north/east components of an arc. For constant velocity arcs (arcs associated with the aircraft traveling at a constant velocity), the ACDS 105 fits a cubic Bezier curve and converts the cubic Bezier curve to a polynomial. In some examples, the ACDS 105 calculates the control points as a function of the sweep of the cubic Bezier curve and determines a radius of the cubic Bezier curve based on the control points. A result of fitting the cubic Bezier curve includes the North and East components of the constant velocity arc. The cubic Bezier curve is then converted to a polynomial. Fitting the cubic Bezier curve to an arc having a radius of one kilometer limits an error associated with fitting the cubic Bezier curve to a maximum of 0.27 meters or approximately 0.27 meters.

For accelerating arcs (arcs associated with the aircraft accelerating or decelerating), the ACDS 105 uses a least square regression fitting process with 13 points. In some examples, the ACDS 105 splits the accelerating arc into multiple polynomials at a North-South limit and an East-West limit. In some examples, the ACDS 105 splits the accelerating arc again to limit the sweep of the arc to a maximum of 45 degrees.

For polynomials determined for each second aircraft (e.g., intruder polynomials), the ACDS 105 rotates the intruder polynomials into a frame of an earth-centered, earth-fixed (ECEF) coordinate system (also referred to as a geocentric coordinate system). The ECEF coordinate system is a Cartesian spatial reference system that represents locations in the vicinity of the Earth as X, Y, and Z measurements from the Earth's center of mass. In some examples, polynomials determined for the first aircraft (e.g., ownship polynomials) remain in the NED coordinate system.

In some examples, the ACDS 105 fits the polynomials to an altitude curve. In some examples, the altitude curve extends to a maximum length of a linear fit.

In some examples, the ACDS 105 fits the polynomials to a latitude, longitude, altitude (LLA) coordinate system. In some examples, fitting the polynomials to an LLA coordinate system (rather than an NED coordinate system) may eliminate the need for the ACDS 105 to perform any coordinate transformations after fitting the polynomials to the segments.

As shown by reference number 135, the ACDS 105 constructs horizontal and vertical distance equations for the trajectories of each aircraft. In some examples, the ACDS 105 determines a first set of time slices of a first predicted path associated with the first aircraft and a set of second time slices of a second predicted path associated with the second aircraft based on the smallest polynomial fit.

The ACDS 105 determines an overlap of a first time slice, of the first set of time slices, and a second time slice, of the set of second time slices. The ACDS 105 constructs the set of horizontal distance equations and the set of vertical distance equations based on the first time slice and the second time slice.

In some examples, the ACDS 105 defines segments corresponding to a trajectory of the first aircraft (e.g., ownship segments) based on local tangent plane (LTP) equations.

The local tangent plane equations for the first aircraft can be represented as a north LTP equation (N_{O}(t)), an east LTP equation (E_{O}(t)), and a down LTP equation (D_{O}(t)). Similarly, the local tangent plane equations for a second aircraft can be represented as a north LTP equation (Ni(t)), an east LTP equation (E_{I}(t)), and a down LTP equation (D_{I}(t)).

The ACDS 105 constructs horizonal and vertical distance equations based on the LTP equations for the first aircraft and the LTP equations for the second aircraft. The horizonal and vertical distance equations may be represented as: ${D}_{v} \left(t\right) = \left|{D}_{O}\left(t\right)-{D}_{I}\left(t\right)\right| ,$ and ${D}_{h}^{2} \left(t\right) = {\left({N}_{O}\left(t\right)-{N}_{I}\left(t\right)\right)}^{2} + {\left({E}_{O}\left(t\right)-{E}_{I}\left(t\right)\right)}^{2} .$

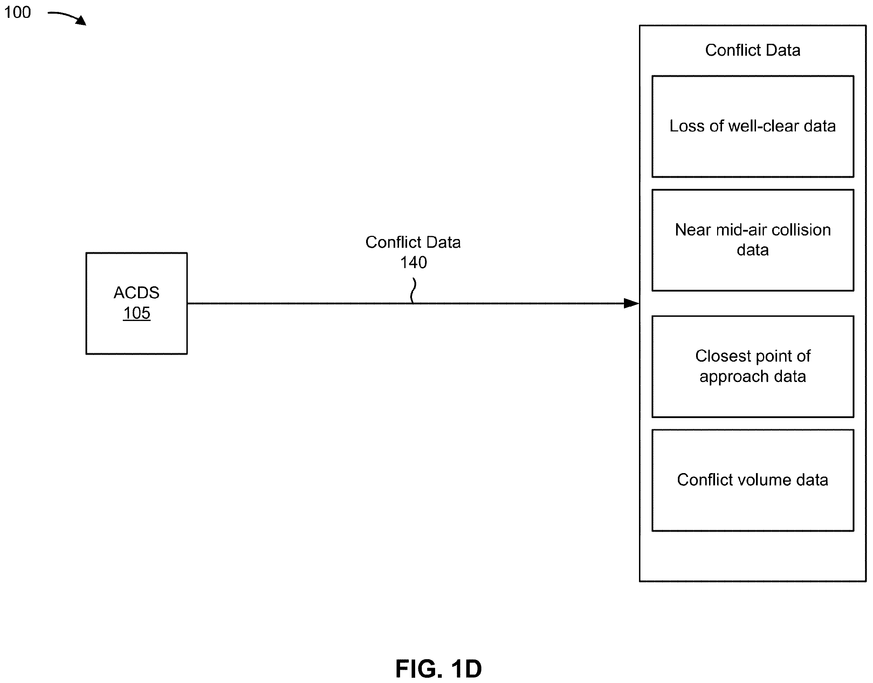

As shown in Fig. 1D, and by reference number 140, the ACDS 105 determines conflict data based on the horizontal and vertical distance equations. The conflict data indicates whether the first aircraft is predicted to safely pass by the second aircraft. In some examples, a preferred distance at which the first aircraft can be from the second aircraft to safely pass by the second aircraft may correspond to an LOWC boundary. In some examples, a minimum distance at which the first aircraft can be from the second aircraft to safely pass by the second aircraft may correspond to an NMAC boundary.

The LOWC boundary and the NMAC boundary can each be used to define a space (e.g., a cylinder) corresponding to an airspace between the first aircraft and a second aircraft.

In some examples, the airspace between the first aircraft and a second craft is defined as a LOWC cylinder having a radius that extends from a midpoint between the first aircraft and the second aircraft. A length of the radius of the LOWC cylinder corresponds to a value of the LOWC boundary. When passing by the second aircraft, the first aircraft may be "well clear" of the second aircraft (e.g., the first aircraft can safely pass by the second aircraft) when both aircraft are outside a perimeter of the LOWC cylinder.

The ACDS 105 sets the horizontal and vertical distance equations to the LOWC boundary. The ACDS 105 determines the zeros (e.g., the roots) of the horizontal and vertical distance equations to determine the times at which the first aircraft enters or exits the LOWC cylinder (e.g., the times at which a distance between the first aircraft and the second aircraft satisfies a threshold corresponding to the LOWC boundary).

In some examples, the airspace between the first aircraft and a second craft is defined as a NMAC cylinder having a radius that extends from a midpoint between the first aircraft and the second aircraft. A length of the radius of the NMAC cylinder corresponds to a value of the NMAC boundary. The ACDS 105 sets the horizontal and vertical distance equations to the NMAC boundary. The ACDS 105 determines the zeros of the horizontal and vertical distance equations to determine the times at which the first aircraft enters or exits the NMAC cylinder (e.g., the times at which a distance between the first aircraft and the second aircraft satisfies a threshold corresponding to the NMAC boundary).

In some examples, the ACDS 105 expands the LOWC cylinder and/or the NMAC cylinder. The ACDS 105 projects an NED covariance matrix forward in time along with the trajectories determined for the first aircraft and the second aircraft. The ACDS 105 uses standard deviations from variance to expand the LOWC cylinder and/or the NMAC cylinder.

In some examples, the ACDS 105 represents standard deviation growth as a linear equation. Representing the standard deviation growth as a linear equation may result in overestimates at short projection times, but may also result in reducing the complexity of fitting polynomials to the linear equation. In some examples, the ACDS 105 models the standard deviation growth as a cubic equation without exceeding fourth order equations.

The ACDS 105 determines derivatives of the horizontal and vertical distance equations. The ACDS 105 determines the zeros of the derivatives of the horizontal and vertical distance equations to determine the closest point of approach (the smallest distance between the first aircraft and the second aircraft as the aircraft pass each other).

In some examples, the horizontal and vertical distance equations and/or the derivatives of the horizontal and vertical distance equations are quadratic or quartic polynomials. In these examples, the ACDS 105 finds the zeros of the horizontal and vertical distance equations and/or the zeros of the derivatives of the horizontal and vertical distance equations using a method that solves for all zeros simultaneously in constant time.

In some examples, the horizontal and vertical distance equations and/or the derivatives of the horizontal and vertical distance equations are sixth order polynomials. In these aspects, the ACDS 105 finds the zeros of the horizontal and vertical distance equations and/or the zeros of the derivatives of the horizontal and vertical distance equations simultaneously by finding the eigenvalues of the companion matrix of the polynomial. In some examples, the ACDS 105 finds the zeros of the horizontal and vertical distance equations and/or the zeros of the derivatives of the horizontal and vertical distance equations simultaneously using Kampé de Fériet equations or another iterative method.

The ACDS 105 generates conflict data indicating the times at which the first aircraft enters or exits the LOWC cylinder, the times at which the first aircraft enters or exits the NMAC cylinder, and/or the closest point of approach.

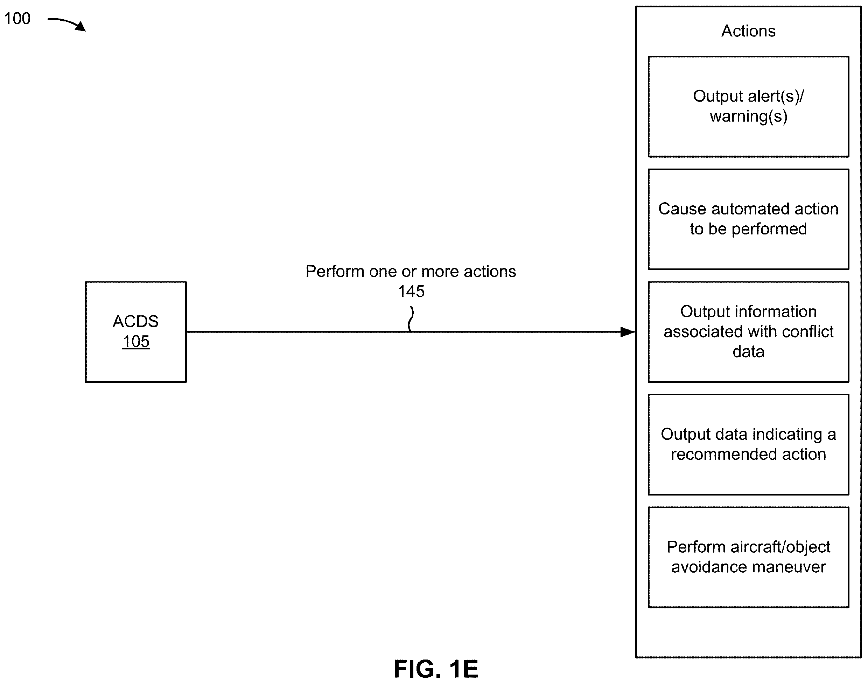

As shown in Fig. 1E, and by reference number 145, the ACDS 105 performs one or more actions based on the conflict data. In some examples, the one or more actions include outputting an alert and/or a warning. For example, the conflict data may indicate that the first aircraft will cross the LOWC boundary and/or the NMAC boundary, and the ACDS 105 may output an alert or warning indicating that the first aircraft will cross the LOWC boundary and/or the NMAC boundary.

In some examples, the one or more actions include causing an automated action to be performed. For example, the conflict data may indicate that the first aircraft will cross the LOWC boundary and/or the NMAC boundary, and the ACDS 105 may cause the aircraft to perform one or more actions that are intended to prevent the first aircraft from crossing the LOWC boundary and/or the NMAC boundary.

In some examples, the one or more actions include outputting information associated with the conflict data. For example, the ACDS 105 may output the times at which the first aircraft enters or exits the LOWC cylinder, the times at which the first aircraft enters or exits the NMAC cylinder, and/or the closest point of approach via a display located in a cockpit of the first aircraft.

In some examples, the one or more actions include outputting data indicating a recommended action. For example, the ACDS 105 may output information indicating one or more actions that can be performed to prevent the first aircraft from crossing the LOWC boundary and/or the NMAC boundary and/or information indicating that no action is required to be taken for the first aircraft to safely pass by the second aircraft.

In some examples, the one or more actions include performing an aircraft and/or object avoidance maneuver. For example, the ACDS 105 may determine that a closest point of approach between the first aircraft and an object (e.g., the second aircraft or another type of object that is in motion and in the air) is within the LOWC boundary and/or the NMAC boundary based on the conflict data. In some aspects, the ACDS 105 may generate a signal configured to control or navigate the first aircraft away from the object to prevent the closest point of approach from being within the LOWC boundary and/or the NMAC boundary. In some examples, the signal may cause an action to be automatically performed that causes the first aircraft to avoid or otherwise move away from the object. In some examples, a pilot or other crew member may cause the action to be performed.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Fig. 2 is a diagram of an example environment 200 in which systems and/or methods described herein may be implemented. As shown in Fig. 2, environment 200 may include an aircraft 210, an ACDS 105, and/or an aircraft sensor system 110. Devices of environment 200 may interconnect via wired connections, wireless connections, or a combination of wired and wireless connections.

The aircraft 210 includes any suitable vehicle and/or device capable of flight. The aircraft 210 may correspond to the first aircraft and/or the second aircraft described elsewhere herein. The aircraft 210 may include, for example, an airplane (e.g., a jet airplane, a propeller airplane, a glider airplane, or the like), a helicopter, an unmanned or uncrewed aerial vehicle (UAV), a drone, a rocketship, a spaceship, a space shuttle, an airship, or a blimp, along with other examples of aerial vehicles and/or aerial devices capable of flight.

The ACDS 105 includes one or more devices capable of receiving, generating, storing, transmitting, processing, and/or providing information, as described elsewhere herein. The ACDS 105 may include one or more devices, such as a flight management computer (FMC), a control display unit (CDU), and/or other devices that automate one or more of flight planning, navigation, and operational tasks of the aircraft 210. The ACDS 105 may be configured to generate, store, and/or update conflict data, as described elsewhere herein. The ACDS 105 may be configured to guide or otherwise control the aircraft 210 in accordance with the conflict data.

The aircraft sensor system 110 includes one or more devices capable of receiving, generating, storing, transmitting, processing, detecting, and/or providing information, as described elsewhere herein. The aircraft sensor system 110 may include one or more sensors, or other devices, that are configured to monitor, measure, and report information related to an operation, environment, and/or performance of the aircraft 210 and/or other aircraft within a vicinity of the aircraft 210. For example, the aircraft sensor system 110 may include one or more sensors, or other devices, for detecting an airspeed, a ground speed, an altitude, an attitude, a position, a bank angle, an acceleration, one or more engine performance parameters, and/or other information associated with the aircraft. The aircraft sensor system 110 may be configured to sense or detect a condition or information and transmit, using a wired or wireless communication interface, an indication of the detected condition or information to the ACDS 105 (e.g., in real-time, or near-real time).

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with aircraft conflict detection. The device 300 corresponds to one or more of the ACDS 105 and/or the aircraft sensor system 110. In some examples, the ACDS 105 and/or the aircraft sensor system 110 include one or more devices 300 and/or one or more components of the device 300. In some examples, including the example shown in Fig. 3, the device 300 includes a bus 310, a processor 320, a memory 330, an input component 340, an output component 350, and/or a communication component 360.

The bus 310 includes one or more components that enable wired and/or wireless communication among the components of the device 300. The bus 310 couples together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 includes a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some examples, the processor 320 includes one or more processors capable of being programmed to perform one or more operations or processes described elsewhere herein.

The memory 330 includes volatile and/or nonvolatile memory, such as random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). In some examples, the memory 330 is a non-transitory computer-readable medium. The memory 330 stores information, one or more instructions, and/or software (e.g., one or more software applications) related to the operation of the device 300. In some examples, the memory 330 includes one or more memories that are coupled (e.g., communicatively coupled) to one or more processors (e.g., processor 320), such as via the bus 310. Communicative coupling between a processor 320 and a memory 330 enables the processor 320 to read and/or process information stored in the memory 330 and/or to store information in the memory 330.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

In some examples, the device 300 performs one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some examples, execution of the set of instructions, by one or more processors 320, causes the one or more processors 320 and/or the device 300 to perform one or more operations or processes described herein. In some examples, hardwired circuitry is used instead of or in combination with the instructions to perform one or more operations or processes described herein. Additionally, or alternatively, the processor 320 may be configured to perform one or more operations or processes described herein. Thus, examples described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

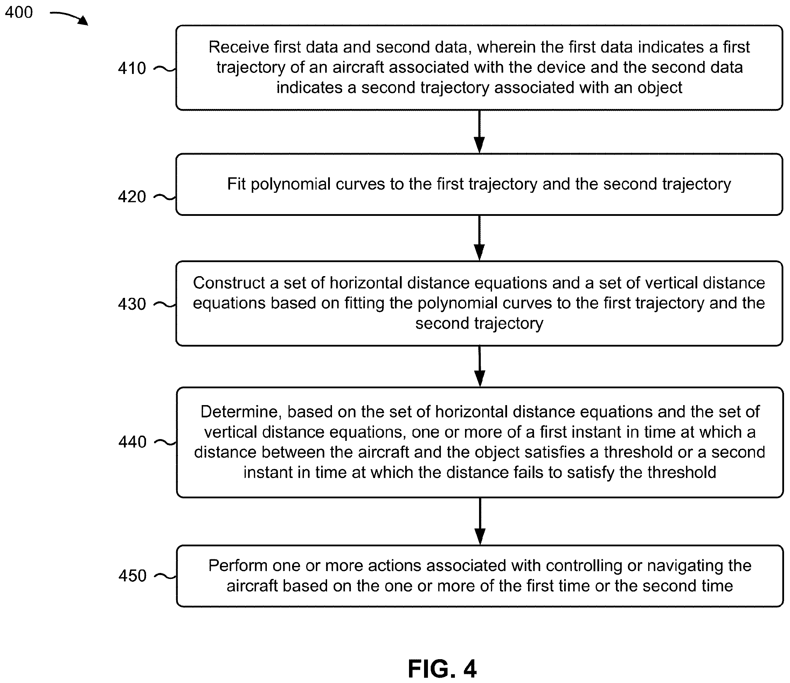

Fig. 4 is a flowchart of an example process 400 associated with aircraft conflict detection. One or more process blocks of Fig. 4 are performed by a device (e.g., an ACDS 105) and/or by another device or a group of devices separate from or including the device, such as an aircraft sensor system (e.g., an aircraft sensor system 110). Additionally, or alternatively, one or more process blocks of Fig. 4 may be performed by one or more components of device 300, such as processor 320, memory 330, input component 340, output component 350, and/or communication component 360.

As shown in Fig. 4, process 400 includes receiving first data and second data, wherein the first data indicates a first trajectory of an aircraft associated with the device and the second data indicates a second trajectory associated with an object (block 410). For example, the device may receive first data and second data, wherein the first data indicates a first trajectory of an aircraft associated with the device and the second data indicates a second trajectory associated with an object (e.g., a second aircraft), as described above.

As further shown in Fig. 4, process 400 includes fitting polynomial curves to the first trajectory and the second trajectory (block 420). For example, the device may fit polynomial curves to the first trajectory and the second trajectory, as described above.

As further shown in Fig. 4, process 400 includes constructing a set of horizontal distance equations and a set of vertical distance equations based on fitting the polynomial curves to the first trajectory and the second trajectory (block 430). For example, the device may construct a set of horizontal distance equations and a set of vertical distance equations based on fitting the polynomial curves to the first trajectory and the second trajectory, as described above.

As further shown in Fig. 4, process 400 includes determining, based on the set of horizontal distance equations and the set of vertical distance equations, one or more of a first instant in time at which a distance between the aircraft and the object satisfies a threshold or a second instant in time at which the distance fails to satisfy the threshold (block 440). For example, the device may determine, based on the set of horizontal distance equations and the set of vertical distance equations, one or more of a first instant in time at which a distance between the aircraft and the object satisfies a threshold or a second instant in time at which the distance fails to satisfy the threshold, as described above.

As further shown in Fig. 4, process 400 includes performing one or more actions associated with controlling or navigating the aircraft based on the one or more of the first instant in time or the second instant in time (block 450). For example, the device may perform one or more actions based on the one or more of the first instant in time or the second instant in time, as described above.

Process 400 may include additional features, such as any single feature or any combination of features described below and/or in connection with one or more other processes described elsewhere herein.

In a first feature, fitting the polynomial curves to the first trajectory and the second trajectory includes determining a smallest order polynomial fit associated with representing a set of first time slices of a first predicted path associated with the aircraft and a set of second time slices of a second predicted path associated with the object with an accuracy that satisfies a threshold.

In a second feature, constructing the set of horizontal equations and the set of vertical equations includes determining, based on the smallest order polynomial fit, the set of first time slices and the set of second time slices, determining an overlap of a first time slice, of the set of first time slices, and a second time slice, of the set of second time slices, and constructing the set of horizontal distance equations and the set of vertical distance equations based on the first time slice and the second time slice.

In a third feature, fitting the polynomial curves to the first trajectory and the second trajectory includes one or more of utilizing a linear polynomial to represent a linear segment of the first trajectory associated with a constant velocity, utilizing a quadratic polynomial to represent a segment of the first trajectory associated with an acceleration or a deceleration of the aircraft, or utilizing a cubic polynomial to represent a segment of the first trajectory corresponding to an arc.

In a fourth feature, fitting the polynomial curves to the first trajectory and the second trajectory further includes rotating the linear segment and the segment of the first trajectory corresponding to the arc into a local north-east-down plane.

In a fifth aspect, fitting the polynomial curves to the first trajectory and the second trajectory includes fitting an altitude curve, wherein the altitude curve extends a maximum length of a linear fit.

In a sixth feature, process 400 includes determining, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.

In a seventh feature, determining the point on the first trajectory and the point on the second trajectory corresponding to the shortest distance between the first trajectory and the second trajectory comprises determining a set of derivatives of the set of horizontal equations and the set of vertical equations, wherein the point on the first trajectory and the point on the second trajectory corresponding to the smallest distance between the first trajectory and the second trajectory is determined based on the set of derivatives.

In an eighth feature, performing the one or more actions associated with controlling or navigating the aircraft includes one or more of outputting an alert or a warning; outputting a signal to control or navigate the aircraft away from the object, or outputting data indicating a recommended action.

In a ninth feature, the object comprises one or more other aircraft.

Although Fig. 4 shows example blocks of process 400, in some examples, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the examples described herein to the precise forms that are described. Modifications and variations can be made in light of the above description or may be acquired from practice of the examples described herein.

It will be apparent that systems and/or methods described herein can be implemented in different forms of hardware, firmware, or a combination of hardware and software. The actual specialized control hardware or software code used to implement these systems and/or methods is not limiting of the examples described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or described in the specification, these combinations are not intended to limit the examples described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

Further examples are set out in the following clauses:
Clause 1. A method, comprising: receiving, by a device, first data and second data, wherein the first data indicates a first trajectory of an aircraft associated with the device and the second data indicates a second trajectory associated with an object moving through an airspace; fitting, by the device, polynomial curves to the first trajectory and the second trajectory; constructing, by the device, a set of horizontal distance equations and a set of vertical distance equations based on fitting the polynomial curves to the first trajectory and the second trajectory; determining, by the device and based on the set of horizontal distance equations and the set of vertical distance equations, one or more of a first instant in time at which a distance between the aircraft and the object satisfies a threshold or a second instant in time at which the distance fails to satisfy the threshold; and performing, by the device, one or more actions associated with controlling or navigating the aircraft based on the one or more of the first instant in time or the second instant in time.
Clause 2. The method of Clause 1, wherein performing the one or more actions associated with controlling or navigating the aircraft includes one or more of: outputting an alert or a warning; outputting a signal to control or navigate the aircraft away from the object; or outputting data indicating a recommended action.
Clause 3. The method of Clause 1 or 2, wherein fitting the polynomial curves to the first trajectory and the second trajectory includes: determining a smallest order polynomial fit associated with representing a set of first time slices of a first predicted path associated with the aircraft and a set of second time slices of a second predicted path associated with the object with an accuracy that satisfies a threshold.
Clause 4. The method of Clause 3, wherein constructing the set of horizontal equations and the set of vertical equations includes: determining, based on the smallest order polynomial fit, the set of first time slices and the set of second time slices; determining an overlap of a first time slice, of the set of first time slices, and a second time slice, of the set of second time slices; and constructing, by the device, the set of horizontal distance equations and the set of vertical distance equations based on the first time slice and the second time slice.
Clause 5. The method of any preceding Clause, wherein fitting the polynomial curves to the first trajectory and the second trajectory includes one or more of: utilizing a linear polynomial to represent a linear segment of the first trajectory associated with a constant velocity; utilizing a quadratic polynomial to represent a segment of the first trajectory associated with an acceleration or a deceleration of the aircraft; or utilizing a cubic polynomial to represent a segment of the first trajectory corresponding to an arc.
Clause 6. The method of Clause 4, wherein fitting the polynomial curves to the first trajectory and the second trajectory further includes: rotating the linear segment and the segment of the first trajectory corresponding to the arc into a local north-east-down plane.
Clause 7. The method of any preceding Clause, wherein fitting the polynomial curves to the first trajectory and the second trajectory includes: fitting an altitude curve, wherein the altitude curve extends a maximum length of a linear fit.
Clause 8. The method of any preceding Clause, further comprising: determining, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.
Clause 9. The method of Clause 8, wherein determining the point on the first trajectory and the point on the second trajectory corresponding to the shortest distance between the first trajectory and the second trajectory comprises: determining a set of derivatives of the set of horizontal equations and the set of vertical equations, wherein the point on the first trajectory and the point on the second trajectory corresponding to the smallest distance between the first trajectory and the second trajectory is determined based on the set of derivatives.
Clause 10. The method of any preceding Clause, wherein the object comprises one or more other aircraft.
Clause 11. A device, comprising: one or more memories; and one or more processors, coupled to the one or more memories, configured to: receive first data and second data, wherein the first data indicates a first trajectory of an aircraft associated with the device and the second data indicates a second trajectory associated with an object; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the aircraft and the object satisfies a threshold or a second instant in time at which the distance fails to satisfy the threshold; and perform one or more actions associated with controlling or navigating the aircraft based on the one or more of the first instant in time or the second instant in time.
Clause 12. The device of Clause 11, wherein the one or more processors, to fit the polynomial curves to the first trajectory and the second trajectory, are configured to: determine a smallest order polynomial fit associated with representing a set of first time slices of a first predicted path associated with the aircraft and a set of second time slices of a second predicted path associated with the object with an accuracy that satisfies a threshold.
Clause 13. The device of Clause 12, wherein the one or more processors, to fit the polynomial curves to the first trajectory and the second trajectory, are configured to one or more of: utilize a linear polynomial to represent a linear segment of the first trajectory associated with a constant velocity; utilize a quadratic polynomial to represent a segment of the first trajectory associated with an acceleration or a deceleration of the aircraft; or utilize a cubic polynomial to represent a segment of the first trajectory corresponding to an arc.
Clause 14. The device of Clause 13, wherein the one or more processors, to fit the polynomial curves to the first trajectory and the second trajectory, are configured to: rotate the linear segment and the segment of the first trajectory corresponding to the arc into a local north-east-down plane.
Clause 15. The device of any of Clauses 11 - 14, wherein the one or more processors, to fit the polynomial curves to the first trajectory and the second trajectory, are configured to: fit an altitude curve, wherein the altitude curve extends a maximum length of a linear fit.
Clause 16. The device of any of Clauses 11 - 15, wherein the one or more processors are further configured to: determine, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.
Clause 17. The device of Clause 16, wherein the one or more processors, to determine the point on the first trajectory and the point on the second trajectory corresponding to the shortest distance between the first trajectory and the second trajectory, are configured to: determine a set of derivatives of the set of horizontal equations and the set of vertical equations, wherein the point on the first trajectory and the point on the second trajectory corresponding to the smallest distance between the first trajectory and the second trajectory is determined based on the set of derivatives.
Clause 18. A non-transitory computer-readable medium storing a set of instructions, the set of instructions comprising: one or more instructions that, when executed by one or more processors of a device, cause the device to: receive first data and second data, wherein the first data indicates a first trajectory of an aircraft associated with the device and the second data indicates a second trajectory associated with an object; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the aircraft and the object satisfies a threshold or a second instant in time at which the distance fails to satisfy the threshold; and perform one or more actions associated with controlling or navigating the aircraft based on the one or more of the first instant in time or the second instant in time.
Clause 19. The non-transitory computer-readable medium of Clause 18, wherein the one or more instructions, that cause the device to fit the polynomial curves to the first trajectory and the second trajectory, cause the device to: determine a smallest order polynomial fit associated with representing a set of first time slices of a first predicted path associated with the aircraft and a set of second time slices of a second predicted path associated with the object with an accuracy that satisfies a threshold.
Clause 20. The non-transitory computer-readable medium of Clause 18 or 19, wherein the one or more instructions, that cause the device to fit the polynomial curves to the first trajectory and the second trajectory, cause the device to one or more of: utilize a linear polynomial to represent a linear segment of the first trajectory associated with a constant velocity; utilize a quadratic polynomial to represent a segment of the first trajectory associated with an acceleration or a deceleration of the aircraft; or utilize a cubic polynomial to represent a segment of the first trajectory corresponding to an arc.
Clause A1. A method, comprising: receiving, by a device, first data and second data, wherein the first data indicates a first trajectory of a first aircraft associated with the device and the second data indicates a second trajectory associated with a second aircraft; fitting, by the device, polynomial curves to the first trajectory and the second trajectory; constructing, by the device, a set of horizontal distance equations and a set of vertical distance equations based on fitting the polynomial curves to the first trajectory and the second trajectory; determining, by the device and based on the set of horizontal distance equations and the set of vertical distance equations, one or more of a first instant in time at which a distance between the first aircraft and the second aircraft satisfies a threshold or a second instant in time at which the distance fails to satisfy the threshold; and performing, by the device, one or more actions based on the one or more of the first instant in time or the second instant in time.
Clause A2. The method of Clause A1, wherein fitting the polynomial curves to the first trajectory and the second trajectory includes: determining a smallest order polynomial fit associated with representing a set of first time slices of a first predicted path associated with the first aircraft and a set of second time slices of a second predicted path associated with the second aircraft with an accuracy that satisfies a threshold.
Clause A3. The method of Clause A2, wherein constructing the set of horizontal equations and the set of vertical equations includes: determining, based on the smallest order polynomial fit, the set of first time slices and the set of second time slices; determining an overlap of a first time slice, of the set of first time slices, and a second time slice, of the set of second time slices; and constructing, by the device, the set of horizontal distance equations and the set of vertical distance equations based on the first time slice and the second time slice.
Clause A4. The method of any of Clauses A1 - A3, wherein fitting the polynomial curves to the first trajectory and the second trajectory includes one or more of: utilizing a linear polynomial to represent a linear segment of the first trajectory associated with a constant velocity; utilizing a quadratic polynomial to represent a segment of the first trajectory associated with an acceleration or a deceleration of the first aircraft; or utilizing a cubic polynomial to represent a segment of the first trajectory corresponding to an arc.
Clause A5. The method of Clause A4, wherein fitting the polynomial curves to the first trajectory and the second trajectory further includes: rotating the linear segment and the segment of the first trajectory corresponding to the arc into a local north-east-down plane.
Clause A6. The method of any of Clauses A1 - A6, wherein fitting the polynomial curves to the first trajectory and the second trajectory includes: fitting an altitude curve, wherein the altitude curve extends a maximum length of a linear fit.
Clause A7. The method of any of Clauses A1 - A6, further comprising: determining, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.
Clause A8. The method of Clause A7, wherein determining the point on the first trajectory and the point on the second trajectory corresponding to the shortest distance between the first trajectory and the second trajectory comprises: determining a set of derivatives of the set of horizontal equations and the set of vertical equations, wherein the point on the first trajectory and the point on the second trajectory corresponding to the smallest distance between the first trajectory and the second trajectory is determined based on the set of derivatives.
Clause A9. A device, comprising: one or more memories; and one or more processors, coupled to the one or more memories, configured to: receive first data and second data, wherein the first data indicates a first trajectory of a first aircraft associated with the device and the second data indicates a second trajectory associated with a second aircraft; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the first aircraft and the second aircraft satisfies a threshold or a second instant in time at which the distance fails to satisfy the threshold; and perform one or more actions based on the one or more of the first instant in time or the second instant in time.
Clause A10. The device of Clause A9, wherein the one or more processors, to fit the polynomial curves to the first trajectory and the second trajectory, are configured to: determine a smallest order polynomial fit associated with representing a set of first time slices of a first predicted path associated with the first aircraft and a set of second time slices of a second predicted path associated with the second aircraft with an accuracy that satisfies a threshold.
Clause A11. The device of Clause A10, wherein the one or more processors, to fit the polynomial curves to the first trajectory and the second trajectory, are configured to one or more of: utilize a linear polynomial to represent a linear segment of the first trajectory associated with a constant velocity; utilize a quadratic polynomial to represent a segment of the first trajectory associated with an acceleration or a deceleration of the first aircraft; or utilize a cubic polynomial to represent a segment of the first trajectory corresponding to an arc.
Clause A12. The device of Clause A11, wherein the one or more processors, to fit the polynomial curves to the first trajectory and the second trajectory, are configured to: rotate the linear segment and the segment of the first trajectory corresponding to the arc into a local north-east-down plane.
Clause A13. The device of any of Clauses A9 - A12, wherein the one or more processors, to fit the polynomial curves to the first trajectory and the second trajectory, are configured to: fit an altitude curve, wherein the altitude curve extends a maximum length of a linear fit.
Clause A14. The device of any of Clause A9 - A13, wherein the one or more processors are further configured to: determine, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.
Clause A15. The device of Clause A14, wherein the one or more processors, to determine the point on the first trajectory and the point on the second trajectory corresponding to the shortest distance between the first trajectory and the second trajectory, are configured to: determine a set of derivatives of the set of horizontal equations and the set of vertical equations, wherein the point on the first trajectory and the point on the second trajectory corresponding to the smallest distance between the first trajectory and the second trajectory is determined based on the set of derivatives.
Clause A16. A non-transitory computer-readable medium storing a set of instructions, the set of instructions comprising: one or more instructions that, when executed by one or more processors of a device, cause the device to: receive first data and second data, wherein the first data indicates a first trajectory of a first aircraft associated with the device and the second data indicates a second trajectory associated with a second aircraft; fit polynomial curves to the first trajectory and the second trajectory; construct a set of horizontal distance equations and a set of vertical distance equations based on fitting the polynomial curves to the first trajectory and the second trajectory; determine, based on the set of horizontal distance equations and the set of vertical distance equations, one or more of a first instant in time at which a distance between the first aircraft and the second aircraft satisfies a threshold or a second instant in time at which the distance fails to satisfy the threshold; and perform one or more actions based on the one or more of the first instant in time or the second instant in time.
Clause A17. The non-transitory computer-readable medium of Clause A16, wherein the one or more instructions, that cause the device to fit the polynomial curves to the first trajectory and the second trajectory, cause the device to: determine a smallest order polynomial fit associated with representing a set of first time slices of a first predicted path associated with the first aircraft and a set of second time slices of a second predicted path associated with the second aircraft with an accuracy that satisfies a threshold.
Clause A18. The non-transitory computer-readable medium of Clause A16 or A17, wherein the one or more instructions, that cause the device to fit the polynomial curves to the first trajectory and the second trajectory, cause the device to one or more of: utilize a linear polynomial to represent a linear segment of the first trajectory associated with a constant velocity; utilize a quadratic polynomial to represent a segment of the first trajectory associated with an acceleration or a deceleration of the first aircraft; or utilize a cubic polynomial to represent a segment of the first trajectory corresponding to an arc.
Clause A19. The non-transitory computer-readable medium of Clause A18, wherein the one or more instructions, that cause the device to fit the polynomial curves to the first trajectory and the second trajectory, cause the device to: rotate the linear segment and the segment of the first trajectory corresponding to the arc into a local north-east-down plane.
Clause A20. The non-transitory computer-readable medium of any of Clauses A16 - A19, wherein the one or more instructions, that cause the device to fit the polynomial curves to the first trajectory and the second trajectory, cause the device to: fit an altitude curve, wherein the altitude curve extends a maximum length of a linear fit.

## Claims

1. A method, comprising:
receiving (115, 410), by a device, first data and second data, wherein the first data indicates a first trajectory of a first aircraft associated with the device and the second data indicates a second trajectory associated with a second aircraft;
fitting (130, 420), by the device, polynomial curves to the first trajectory and the second trajectory;
constructing (135, 430), by the device, a set of horizontal distance equations and a set of vertical distance equations based on fitting the polynomial curves to the first trajectory and the second trajectory;
determining (140, 440), by the device and based on the set of horizontal distance equations and the set of vertical distance equations, one or more of a first instant in time at which a distance between the first aircraft and the second aircraft satisfies a threshold or a second instant in time at which the distance fails to satisfy the threshold; and
performing (145, 450), by the device, one or more actions based on the one or more of the first instant in time or the second instant in time.

2. The method of claim 1, wherein fitting the polynomial curves to the first trajectory and the second trajectory includes:
determining a smallest order polynomial fit associated with representing a set of first time slices of a first predicted path associated with the first aircraft and a set of second time slices of a second predicted path associated with the second aircraft with an accuracy that satisfies a threshold.

3. The method of claim 2, wherein constructing the set of horizontal equations and the set of vertical equations includes:
determining, based on the smallest order polynomial fit, the set of first time slices and the set of second time slices;
determining an overlap of a first time slice, of the set of first time slices, and a second time slice, of the set of second time slices; and
constructing, by the device, the set of horizontal distance equations and the set of vertical distance equations based on the first time slice and the second time slice.

4. The method of any preceding claim, wherein fitting the polynomial curves to the first trajectory and the second trajectory includes one or more of:
utilizing a linear polynomial to represent a linear segment of the first trajectory associated with a constant velocity;
utilizing a quadratic polynomial to represent a segment of the first trajectory associated with an acceleration or a deceleration of the first aircraft; or
utilizing a cubic polynomial to represent a segment of the first trajectory corresponding to an arc.

5. The method of claim 4, wherein fitting the polynomial curves to the first trajectory and the second trajectory further includes:
rotating the linear segment and the segment of the first trajectory corresponding to the arc into a local north-east-down plane.

6. The method of any preceding claim, wherein fitting the polynomial curves to the first trajectory and the second trajectory includes:
fitting an altitude curve, wherein the altitude curve extends a maximum length of a linear fit.

7. The method of any preceding claim, further comprising:
determining, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory.

8. The method of claim 7, wherein determining the point on the first trajectory and the point on the second trajectory corresponding to the shortest distance between the first trajectory and the second trajectory comprises:
determining a set of derivatives of the set of horizontal equations and the set of vertical equations, wherein the point on the first trajectory and the point on the second trajectory corresponding to the smallest distance between the first trajectory and the second trajectory is determined based on the set of derivatives.

9. The method of any preceding claim, wherein the one or more actions are associated with controlling or navigating the first aircraft, and performing the one or more actions associated with controlling or navigating the first aircraft includes one or more of:
outputting an alert or a warning;
outputting a signal to control or navigate the first aircraft away from the second aircraft; or
outputting data indicating a recommended action.

10. A device, comprising:
one or more memories; and
one or more processors, coupled to the one or more memories, configured to:
receive (115, 410) first data and second data, wherein the first data indicates a first trajectory of a first aircraft associated with the device and the second data indicates a second trajectory associated with a second aircraft;
fit (130, 420) polynomial curves to the first trajectory and the second trajectory;
construct (135, 430) a set of horizontal distance equations and a set of vertical distance equations based on fitting the polynomial curves to the first trajectory and the second trajectory;
determine (140, 440), based on the set of horizontal distance equations and the set of vertical distance equations, one or more of a first instant in time at which a distance between the first aircraft and the second aircraft satisfies a threshold or a second instant in time at which the distance fails to satisfy the threshold; and
perform (145, 450) one or more actions based on the one or more of the first instant in time or the second instant in time.

11. The device of claim 10, wherein the one or more processors, to fit the polynomial curves to the first trajectory and the second trajectory, are configured to:
determine a smallest order polynomial fit associated with representing a set of first time slices of a first predicted path associated with the first aircraft and a set of second time slices of a second predicted path associated with the second aircraft with an accuracy that satisfies a threshold.

12. The device of claim 11, wherein the one or more processors, to fit the polynomial curves to the first trajectory and the second trajectory, are configured to one or more of:
utilize a linear polynomial to represent a linear segment of the first trajectory associated with a constant velocity;
utilize a quadratic polynomial to represent a segment of the first trajectory associated with an acceleration or a deceleration of the first aircraft; or
utilize a cubic polynomial to represent a segment of the first trajectory corresponding to an arc, and optionally,
wherein the one or more processors, to fit the polynomial curves to the first trajectory and the second trajectory, are configured to rotate the linear segment and the segment of the first trajectory corresponding to the arc into a local north-east-down plane.

13. The device of claims 10 - 12, wherein the one or more processors, to fit the polynomial curves to the first trajectory and the second trajectory, are configured to:
fit an altitude curve, wherein the altitude curve extends a maximum length of a linear fit.

14. The device of any of claims 10 - 13, wherein the one or more processors are further configured to:
determine, based on the set of horizontal equations and the set of vertical equations, a point on the first trajectory and a point on the second trajectory corresponding to a shortest distance between the first trajectory and the second trajectory relative to distances between other points on the first trajectory and other points on the second trajectory, and optionally,
wherein the one or more processors, to determine the point on the first trajectory and the point on the second trajectory corresponding to the shortest distance between the first trajectory and the second trajectory, are configured to:
determine a set of derivatives of the set of horizontal equations and the set of vertical equations, wherein the point on the first trajectory and the point on the second trajectory corresponding to the smallest distance between the first trajectory and the second trajectory is determined based on the set of derivatives.

15. A non-transitory computer-readable medium storing a set of instructions, the set of instructions comprising:
one or more instructions that, when executed by one or more processors of a device, cause the device to carry out the method of any of claims 1 - 9.
